# FASCICULE DE BREVET EUROPEEN

(11) **EP 2 375 718 B1**
(45) Date de publication et mention de la délivrance du brevet: **27.09.2017**
(21) Numéro de dépôt: 11159832.2
(22) Date de dépôt: 25.03.2011
(51) Int. Cl.: H04M 3/533, H04M 1/725

(54) **Procédé de réponse à un message reçu dans un terminal d'utilisateur via une application de messagerie sur un réseau de communication**
Verfahren zum Antworten auf eine in einem Endgerät empfangene Nachricht über eine Messaging-Anwendung in einem Kommunikationsnetz
Method for replying to a message received in a user terminal via a messaging application on a communications network

(30) Priorité: 31.03.2010 FR 1001356
(43) Date de publication de la demande: 12.10.2011
(73) Titulaire: Orange, 75015 Paris (FR)
(72) Inventeur: Eyrignoux, M. Christophe, 94800, VILLEJUIF (FR); Megnin, Sébastien, 92130, ISSY LES MOULINEAUX (FR); Dugoujom, David, 92130, ISSY LES MOULINEAUX (FR)
(74) Mandataire: Regimbeau

(56) Documents cités:
- EP-A1- 1 653 716
- EP-A2- 1 185 068
- EP-A2- 1 248 486
- WO-A1-98/11745

## Description

La présente invention concerne les services de messagerie sur réseaux de communication, et en particulier un service de réponse par message vocal asynchrone généré en réponse à un message reçu dans un terminal d'utilisateur selon une application de messagerie ou de notification de messages.

Les applications de messagerie ou de notification de messages, visées par la présente invention, sont ainsi, de manière non limitative, les applications de messagerie vocale associées à la téléphonie fixe ou mobile, et en particulier les messageries vocales dites visuelles (*Visual Voice Messaging* en anglais), ainsi que les services de communication de messages sur réseau de type Internet, tels que le courrier électronique (*electronic mail* ou *email* en anglais), les services de messagerie instantanée (*Instant Messaging* en anglais), ou encore le service de messagerie par messages courts (SMS - *Short Message Service*) ou par messages multimédias (MMS - *Multimedia Messaging Service*).

Les services de messagerie vocale, en particulier dans le cadre de la téléphonie, connaissent un regain d'intérêt ces dernières années depuis l'introduction des messageries vocales visuelles dans les récents téléphones dits "évolués" (*smartphones* en anglais), tels que l'iPhone™ de la société Apple. En effet, les utilisateurs sont séduits par ce type de service, car il rend la consultation des messages vocaux plus aisée et surtout plus rapide. En effet, grâce à la centralisation au niveau de l'interface graphique du terminal téléphonique des informations relatives aux messages vocaux reçus, l'utilisateur peut ainsi sélectionner directement les messages vocaux qu'il souhaite écouter, puis rappeler l'émetteur d'un message et/ou supprimer le message. L'utilisation d'une messagerie vocale visuelle est alors assez proche de celle expérimentée avec une messagerie de type électronique (*email*)*,* puisque l'utilisateur a la possibilité de voir les messages vocaux reçus s'afficher directement sur l'écran de son terminal téléphonique, par exemple, sous la forme d'une liste similaire à celles utilisées dans le cadre d'une messagerie électronique.

Dans les services de messagerie vocale visuelle sur téléphonie mobile, une fois que l'utilisateur a écouté un message vocal sélectionné sur l'interface graphique de son *smartphone,* celui-ci a typiquement la possibilité d'appeler automatiquement l'auteur du message vocal, par exemple en activant un élément de l'interface graphique, à condition que le numéro de téléphone ait été transmis avec le message vocal. Cependant, il se peut que l'utilisateur préfère utiliser un mode de communication asynchrone pour contacter l'émetteur du message vocal reçu, par exemple lorsque la couverture réseau est précaire. Dans ce cas, l'utilisateur a la possibilité d'utiliser un service de messagerie textuelle asynchrone tel que le système SMS (*short message system*) mais il n'a pas la possibilité d'envoyer un message vocal, sans tenter d'appeler le destinataire, c'est-à-dire un message vocal asynchrone.

De façon plus générale, dans les applications de messagerie ou de notification de messages, citées plus haut, il n'est pas prévu, à la connaissance des inventeurs, de pouvoir répondre à un message reçu selon l'application considérée par un message vocal transmis de manière asynchrone à un utilisateur auteur du message reçu, c'est-à-dire sans nécessairement chercher à établir une communication téléphonique avec cet utilisateur.

Il existe, par conséquent, un besoin de disposer d'un service de réponse asynchrone par message vocal permettant de répondre à un message reçu selon une application de messagerie conventionnelle, de type varié - par exemple, une messagerie électronique, une messagerie vocale associée à un service de téléphonie, une messagerie instantanée, etc. -, sans requérir la mise en contact directe avec l'auteur du message reçu, ni nécessiter la mise en oeuvre d'une architecture réseau spécifique ou de moyens matériels et/ou logiciels importants, et ce indépendamment de l'application de messagerie considérée.

Ainsi, à titre d'exemple dans le domaine de la messagerie vocale, le document de brevet US 2009/0117880 A1 décrit un système de messagerie vocale sur réseau de téléphonie. Le système comprend un premier point d'accès dans lequel des messages vocaux sont reçus, puis stockés dans une base de données de messages. Ensuite, pour chaque message vocal reçu, un gestionnaire de messages vocaux associe le message vocal avec un identifiant de message, un identifiant de destinataire et un numéro de téléphone de retrait du message vocal, ces données sont ensuite mémorisées dans un index. Un module de notification transmet alors un message de notification, par exemple un SMS, au destinataire du message vocal, ce message de notification incluant le numéro de retrait du message vocal. Le destinataire du message vocal compose alors le numéro de téléphone de retrait du message, contenu dans le message de notification, et l'appel est reçu par un deuxième point d'accès. Enfin, le deuxième point d'accès détecte le numéro de téléphone du destinataire et identifie, en consultant l'index, le message vocal associé, et le transmet au destinataire.

Le système de messagerie vocale précité utilise une architecture relativement complexe puisqu'il nécessite en particulier une base de données pour stocker les messages et un dispositif de gestion des messages vocaux reçus dans le premier point d'accès.

La présente invention vise ainsi à fournir, selon un premier aspect, un procédé de réponse à un message reçu dans un terminal d'un premier utilisateur via une application de messagerie sur un réseau de communication, remarquable en ce qu'il comporte les étapes suivantes :
- enregistrement dans le terminal du premier utilisateur, d'un message vocal de réponse destiné à un second utilisateur émetteur du message reçu ;
- test automatique de la connexion entre le terminal du premier utilisateur et le réseau de communication, et dès que le terminal du premier utilisateur est connecté au réseau, envoi du message vocal de réponse à destination d'un serveur d'application sur le réseau ;
- réception du message vocal de réponse dans le serveur d'application et détermination de l'accessibilité ou non d'au moins un serveur de messagerie associé au second utilisateur, dans lequel il est possible de déposer le message vocal de réponse ;
- lorsqu'au moins un serveur de messagerie associé au second utilisateur a été déterminé, dépôt du message vocal de réponse dans un serveur de messagerie déterminé ;
- transmission, à destination du second utilisateur, d'un message d'avertissement de l'arrivée du message vocal de réponse, lorsqu'aucun serveur de messagerie associé au second utilisateur, dans lequel il est possible de déposer le message vocal, n'a été déterminé.

Grâce à un procédé de réponse selon l'invention, tel que succinctement défini ci-dessus, il est possible à un utilisateur ayant reçu un message selon l'application de messagerie considérée, de répondre par un message vocal, même si le terminal de cet utilisateur n'est pas connecté au réseau, puisque dans ce cas, le message vocal de réponse est stocké temporairement dans le terminal en attendant la reconnexion du terminal au réseau. Par ailleurs, avantageusement, il n'est pas nécessaire que l'utilisateur destinataire du message de réponse soit abonné à un service particulier pour pouvoir recevoir un tel message vocal de réponse, ce qui permet à l'utilisateur qui envoie le message vocal de réponse, d'utiliser ce mode de réponse, même si aucun serveur de messagerie associé au second utilisateur n'est disponible pour y déposer le message vocal de réponse.

L'invention peut être mise en oeuvre avec des applications de messagerie du types variés, telles que par exemple, une application de messagerie électronique sur réseau de communication téléphonique, une application de messagerie électronique sur un réseau de communication de type Internet, ou encore une application de messagerie instantanée sur un réseau de communication de type Internet.

Selon un mode de réalisation particulier de l'invention, la détermination de l'accessibilité ou non d'un serveur de messagerie associé au second utilisateur, inclut l'identification de l'opérateur réseau auquel est abonné le second utilisateur destinataire du message vocal de réponse, à partir d'un identifiant d'utilisateur destinataire, contenu dans le message vocal de réponse. Dans ce mode de réalisation, le message vocal de réponse est déposé dans un serveur de messagerie associé à l'opérateur réseau du second utilisateur, lorsque l'opérateur réseau du second utilisateur est identifié comme étant celui du premier utilisateur. Sinon, lorsque l'opérateur réseau du second utilisateur est identifié comme étant différent de celui du premier utilisateur, un message d'avertissement est transmis à destination du second utilisateur pour l'avertir de l'arrivée du message vocal de réponse.

Ainsi, quel que soit l'opérateur réseau du second utilisateur, le premier utilisateur peut envoyer un message vocal de réponse au second utilisateur. Le service de réponse par message vocal, selon l'invention, n'est donc pas réservé seulement à une communauté d'utilisateurs, abonnés chez le même opérateur réseau.

Selon un mode de réalisation particulier, l'invention est mise en oeuvre avec une application de messagerie vocale sur réseau de communication téléphonique. Dans ce mode de réalisation, le message reçu est alors un message vocal, et à l'étape de transmission d'un message d'avertissement, un appel téléphonique est automatiquement composé vers le second utilisateur, via un serveur vocal interactif piloté par le serveur d'application, pour tenter de transmettre le message d'avertissement de l'arrivée du message vocal de réponse.

Ainsi, même si aucun serveur de messagerie associé au second utilisateur n'est pas directement accessible pour y déposer le message vocal de réponse, le second utilisateur peut être informé de la réception du message vocal de réponse, soit via une annonce vocale s'il répond à l'appel téléphonique d'avertissement, soit de manière classique, via sa messagerie vocale. En effet, si le second utilisateur ne répond pas à l'appel d'avertissement, c'est sa messagerie vocale, associée à l'opérateur téléphonique auquel il est abonné, qui prend en charge l'appel téléphonique d'avertissement.

Dans ce mode de réalisation, le message d'avertissement de l'arrivée du message vocal de réponse, peut être sous la forme d'une annonce vocale diffusée par un serveur vocal interactif.

Selon une application particulière de l'invention, l'application de messagerie vocale est une application de messagerie vocale visuelle. Dans cette application de l'invention, l'enregistrement du message vocal de réponse dans le terminal du premier utilisateur, est précédé de la sélection d'un message vocal reçu, identifié par un élément d'une interface utilisateur graphique affichée sur un écran équipant le terminal du premier utilisateur, et d'une action effectuée par le premier utilisateur via l'interface utilisateur graphique pour déclencher l'enregistrement du message vocal de réponse.

Ainsi, dans cette application particulière de l'invention, on peut coupler une messagerie vocale visuelle classique avec un mode de réponse par message vocal, de nature asynchrone, c'est-à-dire ne nécessitant pas la mise en relation directe, par exemple via un appel téléphonique direct, avec le destinataire du message de réponse.

Corrélativement, selon respectivement un second et un troisième aspect, l'invention concerne :
- Un procédé de traitement, dans un terminal d'un premier utilisateur, d'un message reçu dans le terminal via une application de messagerie sur un réseau de communication, remarquable en ce qu'il comporte les étapes suivantes :
   - enregistrement dans le terminal du premier utilisateur, d'un message vocal de réponse destiné à un second utilisateur émetteur du message reçu ;
   - test automatique de la connexion entre le terminal du premier utilisateur et le réseau de communication, et dès que le terminal du premier utilisateur est connecté au réseau, envoi du message vocal de réponse à destination d'un serveur d'application sur le réseau.
- Un procédé de traitement, dans un serveur d'application sur un réseau de communication, d'un message vocal de réponse en provenance d'un terminal d'utilisateur via le réseau de communication, et destiné à un second utilisateur, remarquable en ce qu'il comporte les étapes suivantes :
   - réception du message vocal de réponse dans le serveur d'application et détermination de l'accessibilité ou non d'au moins un serveur de messagerie associé au second utilisateur, dans lequel il est possible de déposer le message vocal de réponse ;
   - lorsqu'au moins un serveur de messagerie associé au second utilisateur a été déterminé, dépôt du message vocal de réponse dans un serveur de messagerie déterminé ;
   - transmission, à destination du second utilisateur, d'un message d'avertissement de l'arrivée du message vocal de réponse, lorsqu'aucun serveur de messagerie associé au second utilisateur, dans lequel il est possible de déposer le message vocal, n'a été déterminé.

Selon un quatrième aspect, l'invention concerne un terminal d'utilisateur apte à être connecté à un réseau de communication, pour la mise en oeuvre d'un procédé de réponse, tel que succinctement exposé ci-dessus, à un message reçu dans le terminal d'utilisateur via une application de messagerie sur le réseau de communication. Conformément à l'invention, ce terminal d'utilisateur comprend :
- des moyens d'enregistrement d'un message vocal de réponse, destiné à un second utilisateur émetteur du message reçu ;
- des moyens de test automatique de la connexion entre le terminal d'utilisateur et le réseau de communication ;
- des moyens d'envoi automatique du message vocal de réponse à destination d'un serveur d'application sur le réseau, dès que le terminal d'utilisateur est connecté au réseau.

Dans un mode de réalisation particulier du terminal d'utilisateur selon l'invention, lorsque l'application de messagerie est une application de messagerie vocale visuelle, le terminal d'utilisateur comprend en outre des moyens de sélection d'un message vocal reçu, identifié par un élément d'une interface utilisateur graphique affichée sur un écran équipant le terminal d'utilisateur, les moyens d'enregistrement d'un message vocal de réponse, étant adaptés à déclencher l'enregistrement du message vocal de réponse, suite à une action effectuée par l'utilisateur du terminal via l'interface utilisateur graphique.

Selon une caractéristique particulière de réalisation du terminal d'utilisateur selon l'invention, les moyens d'enregistrement d'un message vocal de réponse, sont adaptés à générer une requête de type HTTP, le message vocal de réponse étant encapsulé dans le corps de la requête.

On peut en outre prévoir que les moyens d'enregistrement d'un message vocal de réponse, sont adaptés à inclure dans l'en-tête de la requête de type HTTP, des instructions concernant le mode de délivrance du message vocal de réponse au second utilisateur, ces instructions incluant au moins une instruction parmi au moins la liste d'instructions suivantes :
- interdire la mise en relation directe avec le second utilisateur ;
- indiquer un numéro de rappel du premier utilisateur ;
- indiquer un nombre maximal de tentatives de dépôt du message vocal de réponse dans le serveur de messagerie associé à l'opérateur réseau du second utilisateur ;
- envoyer au premier utilisateur une notification de réception du message vocal de réponse par le second utilisateur.

Selon un cinquième aspect, l'invention concerne un serveur d'application relié à un réseau de communication, pour la mise en oeuvre d'un procédé, tel que succinctement exposé ci-dessus, de réponse à un message reçu dans un terminal d'utilisateur via une application de messagerie sur le réseau de communication. Conformément à l'invention, ce serveur d'application comprend :
- des moyens de réception d'un message vocal de réponse en provenance d'un terminal d'un premier utilisateur ;
- des moyens de détermination de l'accessibilité ou non d'au moins un serveur de messagerie associé au second utilisateur, dans lequel il est possible de déposer le message vocal de réponse ;
- des moyens de dépôt du message vocal de réponse dans un serveur de messagerie associé au second utilisateur, lorsque les moyens de détermination de serveur ont déterminé au moins un serveur de messagerie associé au second utilisateur ;
- des moyens de transmission, à destination du second utilisateur, d'un message d'avertissement de l'arrivée du message vocal de réponse, lorsque les moyens de détermination de serveur n'ont pas déterminé de serveur de messagerie associé au second utilisateur.

Selon un mode de réalisation particulier du serveur d'application selon l'invention :
- les moyens de détermination de l'accessibilité ou non d'un serveur de messagerie associé au second utilisateur, incluent des moyens d'identification, à partir d'un identifiant d'utilisateur destinataire contenu dans le message vocal de réponse, de l'opérateur réseau auquel est abonné un second utilisateur, destinataire du message vocal de réponse ;
- les moyens de dépôt du message vocal de réponse sont configurés pour déposer le message vocal de réponse dans un serveur de messagerie associé à l'opérateur réseau du second utilisateur, lorsque l'opérateur réseau du second utilisateur est identifié comme étant celui du premier utilisateur ;
- les moyens de transmission d'un message d'avertissement sont configurés pour transmettre à destination du second utilisateur un message d'avertissement de l'arrivée du message vocal de réponse, lorsque l'opérateur réseau du second utilisateur est identifié comme étant différent de celui du premier utilisateur.

L'invention concerne également un programme d'ordinateur sur un support d'informations, destiné à être exécuté dans un terminal d'utilisateur tel que brièvement défini ci-dessus, pour la mise en oeuvre d'un procédé de réponse à un message, selon l'invention. A cet effet, le programme précité comprend des instructions de programme dont l'exécution dans le terminal d'utilisateur, met en oeuvre au moins les étapes suivantes :
- enregistrement d'un message vocal de réponse destiné à un second utilisateur émetteur d'un message reçu dans le terminal d'utilisateur ;
- test automatique de la connexion entre le terminal d'utilisateur et un réseau de communication auquel est connecté le terminal d'utilisateur ;
- envoi automatique du message vocal de réponse à destination d'un serveur d'application sur le réseau, dès que ledit terminal d'utilisateur est connecté au réseau.

La présente invention concerne encore un programme d'ordinateur sur un support d'informations, destiné à être exécuté dans un serveur d'application tel que brièvement défini ci-dessus, pour la mise en oeuvre d'un procédé de réponse à un message, selon l'invention. A cet effet, le programme précité comprend des instructions de programme dont l'exécution dans le serveur d'application, met en oeuvre au moins les étapes suivantes :
- réception d'un message vocal de réponse en provenance d'un terminal d'un premier utilisateur et destiné à un second utilisateur ;
- détermination de l'accessibilité ou non d'au moins un serveur de messagerie associé au second utilisateur, dans lequel il est possible de déposer le message vocal de réponse ;
- lorsqu'au moins un serveur de messagerie associé au second utilisateur a été déterminé, dépôt du message vocal de réponse dans un serveur de messagerie déterminé ;
- transmission, à destination du second utilisateur, d'un message d'avertissement de l'arrivée du message vocal de réponse, lorsqu'il n'a été déterminé aucun serveur de messagerie, associé au second utilisateur, dans lequel il est possible de déposer le message vocal.

Les avantages procurés par les procédés mis en oeuvre respectivement dans un terminal d'utilisateur et dans un serveur d'application, par le terminal d'utilisateur, le serveur d'application ou les programmes d'ordinateur, susmentionnés, sont identiques à ceux mentionnés plus haut en relation avec le procédé, selon l'invention, de réponse à un message reçu dans un terminal d'un premier utilisateur via une application de messagerie sur un réseau de communication.

L'invention sera mieux comprise à l'aide de la description suivante d'un mode de réalisation de l'invention donné à titre d'exemple, faite en se référant aux dessins annexés dans lesquels :
- la figure 1 représente, de manière générale, un système de réponse à un message vocal reçu dans un terminal d'utilisateur via une application de messagerie sur un réseau de communication, selon l'invention ; et
- la figure 2 est un organigramme illustrant, selon un mode de réalisation de l'invention, les principales étapes d'un procédé de réponse à un message vocal reçu dans un terminal d'utilisateur via une application de messagerie sur un réseau de communication.

Comme dit précédemment, la présente invention peut être mise en oeuvre dans le cadre d'applications de communication sur réseaux téléphoniques mais également dans le cadre d'applications de communication sur un réseau de type de l'Internet, telles que la messagerie électronique (*email*) ou la messagerie instantanée (*Instant Messaging*) c'est-à-dire dans des domaines où l'on assiste à une progression rapide de l'utilisation de modes de communication synchrone et asynchrone. Pour rappel, on entend par mode de communication synchrone, un mode de communication nécessitant une connexion simultanée des utilisateurs qui communiquent.

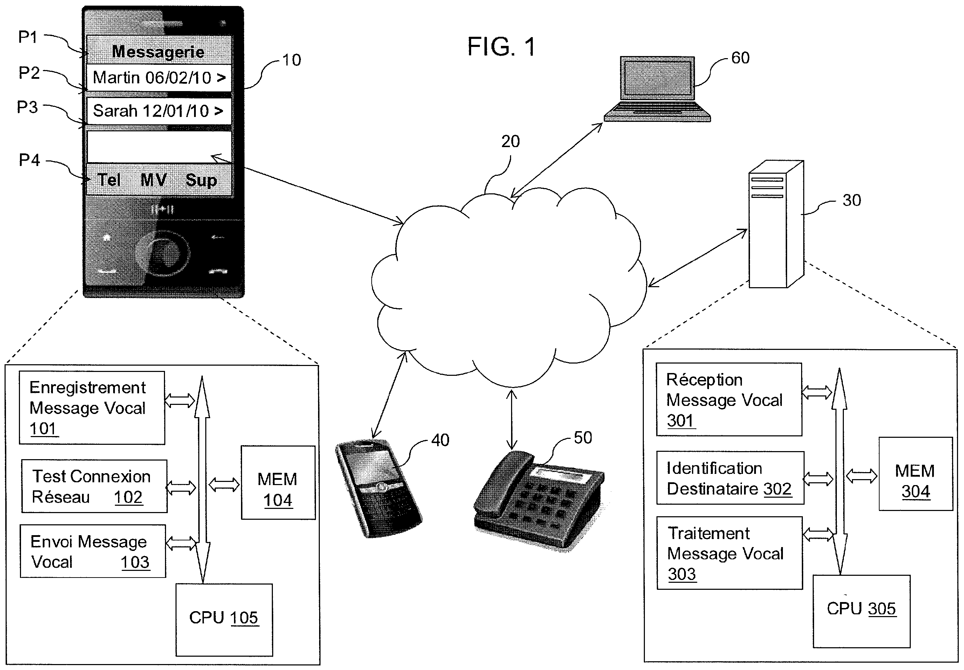

La figure 1 illustre un système de réponse à un message vocal reçu dans un terminal d'utilisateur via une application de messagerie sur un réseau de communication, selon l'invention. Comme représenté à la figure 1, des terminaux de communication 10, 40, 50, 60 sont connectés à un réseau de communication 20, ainsi qu'un serveur d'application 30 selon l'invention.

Dans l'exemple choisi et représenté, les terminaux 10 et 40 sont des terminaux de téléphonie mobile sur réseau de type UMTS (*Universal Mobile Telecommunications System)* par exemple, tandis que le terminal 50 est un terminal de téléphonie fixe sur réseau de type commuté (RTC) ou bien sur réseau Internet (téléphonie sur IP). Les terminaux mobiles 10 et 40 sont munis, par exemple, d'une application de messagerie vocale visuelle (comme représenté sur le terminal 10) et d'une application de messagerie électronique. Le terminal fixe 50 ne dispose pas d'application de messagerie vocale virtuelle, mais peut se connecter à une messagerie vocale hébergée sur un serveur de messagerie (non représenté) sur le réseau. Enfin, le terminal de communication 60 est un ordinateur personnel (PC) équipé de différents logiciels de communication tels qu'une messagerie électronique, une messagerie instantanée, et un logiciel de téléphonie (*softphone*)*.*

Compte tenu des terminaux de communication de type différent qui peuvent se connecter au réseau 20, ce dernier représente un réseau de nature hétérogène, constitué de différents types de réseaux interconnectés : réseau de téléphonie fixe, réseau de téléphonie mobile, réseau Internet. Par ailleurs, les terminaux peuvent être connectés au réseau 20 selon différents modes d'accès, par exemple via une liaison filaire (par exemple pour le terminal fixe 50), une liaison radio (terminaux mobiles 10 et 40, par exemple), une liaison locale sans fil, Wi-Fi par exemple, permettant l'accès à un réseau local relié à l'Internet ou bien à une ligne ADSL (par exemple pour le terminal PC 60).

Dans le mode de réalisation choisi et décrit ci-après, l'application de messagerie est une application de messagerie vocale sur réseau de communication téléphonique, et en particulier une messagerie vocale visuelle.

Le terminal utilisateur 10 est équipé classiquement d'un écran affichant une interface utilisateur graphique (*graphic user interface* en anglais) présentant des informations relatives à la messagerie vocale de l'utilisateur du terminal. Ainsi, dans la portion P1 de l'interface graphique figure l'intitulé "Messagerie" puis en dessous est présentée une liste de messages vocaux reçus via la messagerie vocale associée au service téléphonique auquel est abonné l'utilisateur du terminal 10. La liste indique ici que deux messages vocaux ont été reçus, un message provenant de Martin (P2) et un message provenant de Sarah (P3), avec leur dates d'arrivée respectives et un élément graphique ">" permettant de sélectionner le message pour l'écouter.

Dans la portion P4 de l'interface graphique liée à la messagerie vocale visuelle du terminal utilisateur 10, trois modes d'actions sont proposés à l'utilisateur, activables respectivement par un des trois boutons définis ci-dessous :
- "Tel" : répondre au message vocal sélectionné par un appel téléphonique direct à l'auteur du message ;
- "Sup" : supprimer le message vocal sélectionné ;
- "MV" : répondre au message vocal sélectionné en envoyant un message vocal.

L'utilisateur a la possibilité de sélectionner un message vocal et d'activer un des modes d'action susmentionnés, en utilisant des moyens classiques, par exemple en touchant la zone correspondante de l'écran.

Comme représenté à la figure 1, conformément à l'invention, le terminal utilisateur 10 comprend par ailleurs un module 101 d'enregistrement d'un message vocal de réponse destiné à l'émetteur du message vocal reçu sélectionné - par exemple "Martin". Dans le mode de réalisation illustré, le module d'enregistrement 101 est adapté à déclencher l'enregistrement d'un message vocal de réponse, suite à une action effectuée par l'utilisateur du terminal via l'interface utilisateur graphique, par exemple en touchant le bouton "MV" de la portion P4 de l'interface graphique.

Le terminal utilisateur 10 comprend en outre selon l'invention un module 102 de test automatique de la connexion entre le terminal 10 et le réseau de communication 20, ainsi qu'un module 103 d'envoi automatique du message vocal de réponse à destination du serveur d'application 30 sur le réseau, dès que le terminal 10 est connecté au réseau. Le terminal 10 comprend aussi une mémoire 104 permettant en particulier de stocker, au moins temporairement, un message vocal de réponse non encore envoyé, tant que le terminal utilisateur 10 n'est pas connecté au réseau, par exemple lorsque l'utilisateur du terminal mobile 10 se trouve dans une zone géographique non couverte par le réseau cellulaire auquel il est abonné.

Selon un mode particulier de réalisation, le module 101 d'enregistrement d'un message vocal de réponse est adapté, d'une part, à générer une requête HTTP (*HyperText Transfer Protocol*) dans le corps de laquelle le message vocal de réponse est encapsulé. Le module 101 d'enregistrement est d'autre part adapté pour inclure dans l'en-tête de la requête HTTP, des instructions concernant le mode de délivrance du message vocal de réponse à l'utilisateur destinataire. Les différents types d'instructions concernant le mode de délivrance de message vocal de réponse à son destinataire sont détaillés plus loin dans la description.

En pratique les modules décrits ci-dessus qui équipent le terminal utilisateur 10 sont réalisés sous forme logicielle, c'est-à-dire sous la forme d'un ou plusieurs programmes d'ordinateur mémorisés sur un support d'informations tel qu'une mémoire de type RAM ou ROM ou bien sous forme de microcode incorporé dans un circuit microélectronique intégré. Le type d'implantation logicielle varie bien sûr en fonction du type de terminal utilisateur considéré (téléphone mobile, *smartphone,* téléphone fixe, ordinateur personnel, etc.).

Comme représenté sur la figure 1, le terminal utilisateur 10 comprend une unité centrale de traitement CPU 105, telle qu'un microprocesseur ou un microcontrôleur chargé d'exécuter les instructions du ou des programmes incorporés dans un terminal utilisateur selon l'invention, et de commander en conséquence le fonctionnement des différents modules du terminal 10 précités afin de mettre en oeuvre la présente invention.

Toujours à la figure 1, le serveur d'application 30 selon l'invention comprend un module 301 de réception de messages vocaux de réponse tels que définis plus haut, en provenance de terminaux de communication d'utilisateurs, tels que le terminal mobile 10. Le serveur d'application comprend en outre un module 302 d'identification dont la fonction est d'identifier l'utilisateur destinataire de chaque message vocal de réponse reçu, puis de déterminer l'accessibilité ou non d'au moins un serveur de messagerie associé au second utilisateur, dans lequel il est possible de déposer le message vocal de réponse. En pratique, selon une caractéristique de réalisation, le module 302 d'identification est configuré pour identifier l'opérateur réseau auquel est abonné le second utilisateur, destinataire du message vocal de réponse, à partir d'un identifiant d'utilisateur destinataire contenu dans le message vocal de réponse.

Le serveur d'application comprend aussi un module 303 de traitement de messages vocaux. En particulier, le module 303 de traitement de messages est configuré, d'une part, pour déposer le message vocal de réponse dans un serveur de messagerie associé au second utilisateur, après que le module d'identification 302 a déterminé au moins un serveur de messagerie associé au second utilisateur, accessible facilement pour y déposer un message. Le module 303 de traitement est configuré, d'autre part, pour transmettre, à destination du second utilisateur, un message d'avertissement de l'arrivée d'un message vocal de réponse, lorsqu'aucun serveur de messagerie associé au second utilisateur n'a été déterminé par le module d'identification 302.

En pratique les modules décrits ci-dessus, qui équipent le serveur d'application 30, sont également réalisés sous forme logicielle, comme expliqué plus haut en relation avec le terminal utilisateur 10. Ainsi, comme représenté sur la figure 1, le serveur d'application 30 comprend également une unité centrale de traitement CPU 305, telle qu'un microprocesseur, chargée d'exécuter les instructions du ou des programmes incorporés dans le serveur d'application, et de commander en conséquence le fonctionnement des différents modules du serveur d'application 30 précités, afin de mettre en oeuvre la présente invention.

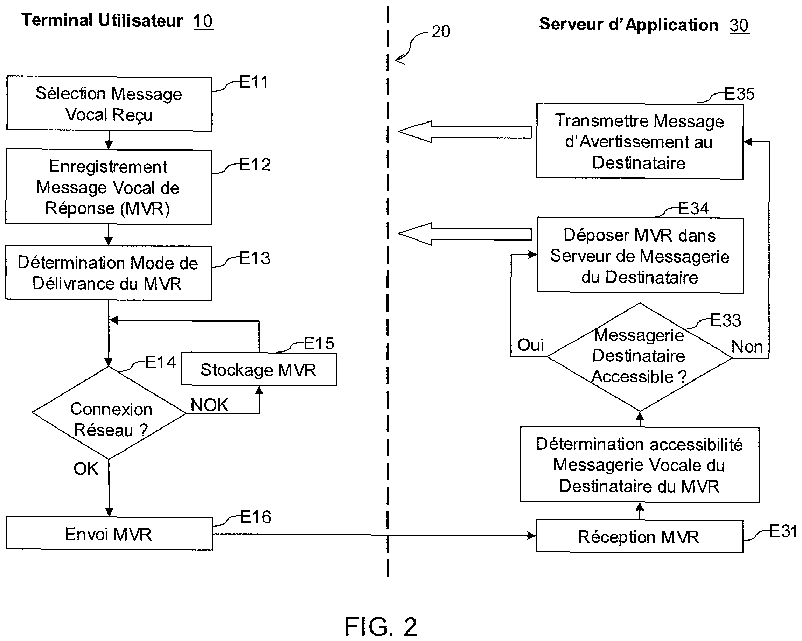

En liaison avec l'organigramme représenté à la **figure 2****,** on va à présent décrire de façon plus détaillée le déroulement des étapes d'un procédé, selon l'invention, de réponse à un message vocal reçu dans un terminal d'utilisateur via une application de messagerie sur un réseau de communication. Dans l'exemple décrit, il s'agit d'une messagerie vocale dans le cadre d'un réseau de communication téléphonique.

L'organigramme de la figure 2 illustre les opérations exécutées par le terminal utilisateur 10 et le serveur d'application 30 de la figure 1. Ainsi, à l'étape E11, le terminal utilisateur 10, ici un téléphone mobile équipé d'une messagerie vocale visuelle, sélectionne un message vocal reçu dans une liste (P2, P3) affichée sur l'écran du terminal. Par exemple, l'utilisateur du terminal 10 (désigné aussi par "premier utilisateur" dans le présent exposé) sélectionne le message vocal reçu de la part de Martin dont les coordonnées téléphoniques figurent dans la liste de contacts stockée dans le téléphone. Ne voulant pas appeler Martin directement au téléphone, par exemple parce que le premier utilisateur se trouve dans un train et craint de ne pas avoir de couverture réseau, il décide de répondre au message de Martin par l'envoi d'un message vocal de réponse, conformément à l'invention. A cet effet, à l'étape E12, il sélectionne le mode de réponse par message vocal (MV), en activant le bouton 'MV' du téléphone et enregistre alors un message vocal de réponse, au moyen d'un microphone (non représenté) équipant le terminal 10. Le message vocal de réponse est alors stocké dans le terminal (mémoire 104).

Comme mentionné plus haut, selon un mode de réalisation particulier, le message vocal encodé dans un format de codage audio connu en soi, est encapsulé dans le corps d'un message selon le protocole HTTP, en pratique une requête HTTP de type POST.

Par ailleurs, selon un mode de réalisation particulier, l'en-tête de la requête HTTP inclut des instructions concernant le mode de délivrance du message vocal de réponse à l'utilisateur destinataire (désigné aussi par "second utilisateur" dans le présent exposé), c'est-à-dire dans cet exemple, le contact Martin. En pratique, les instructions relatives au mode de délivrance du message vocal de réponse sont déterminées par l'utilisateur du terminal 10, lors de l'étape E13, via une interface utilisateur graphique affichée sur l'écran du terminal. Selon un mode de réalisation, les instructions de délivrance du message vocal de réponse, comportent les instructions suivantes :
- interdire la mise en relation directe avec le second utilisateur, par appel téléphonique par exemple ;
- indiquer un numéro de rappel du premier utilisateur ;
- indiquer un nombre maximal de tentatives de dépôt du message vocal de réponse dans le serveur de messagerie associé à l'opérateur réseau du second utilisateur ;
- envoyer au premier utilisateur une notification de réception du message vocal de réponse par le second utilisateur ;

De retour à la figure 2, à l'étape E14 qui suit, la connexion entre le terminal utilisateur 10 et le réseau 20 est testée de manière automatique, c'est-à-dire sans intervention de l'utilisateur, par le module de test 102. Ainsi, tant que la connexion au réseau n'est pas bonne (E14, NOK), le message vocal de réponse est stocké (E15) en mémoire 104, et n'est pas envoyé. En revanche, dès que la connexion réseau est rétablie (E14, OK), le message vocal est envoyé (étape E16) sur le réseau 20 à destination du serveur d'application (30).

A l'étape E31, le serveur d'application 30 reçoit le message vocal de réponse. A l'étape E32 qui suit, le module 302 du serveur d'application identifie d'abord le destinataire du message, à partir d'une information contenue dans l'en-tête du message HTTP identifiant le destinataire du message.

Ensuite, toujours à l'étape E32, le module d'identification 302 détermine s'il existe au moins un serveur de messagerie associé au second utilisateur, dans lequel il est possible de déposer le message vocal de réponse. Selon une mise en oeuvre choisie de l'invention, une fois le destinataire du message identifié, le module d'identification 302 du serveur procède à l'identification de l'opérateur réseau auquel est abonné le second utilisateur destinataire du message vocal de réponse. En effet, si l'opérateur téléphonique du second utilisateur est le même que celui du premier utilisateur, il est en général relativement aisé pour le serveur d'application d'accéder directement à la messagerie vocale du second utilisateur.

Dans le cas où les deux utilisateurs ne sont pas abonnés au même opérateur téléphonique, le serveur d'application pourra cependant accéder directement à un serveur de messagerie associé au second utilisateur, s'il dispose, par exemple, d'une interface logicielle de type API (*Application Programing Interface*) fournie par l'opérateur du second utilisateur, pour accéder directement à un serveur de messagerie vocale de l'opérateur du second utilisateur.

A l'étape de test E33, le module 302 d'identification situé dans le serveur d'application 30 prend une décision en fonction de l'accessibilité ou non d'un serveur de messagerie associé au second utilisateur, directement accessible.

Si c'est le cas (E33, oui), le message vocal de réponse est transmis à un serveur de messagerie de l'utilisateur destinataire pour être déposé dans la messagerie vocale de ce dernier (étape E34).

Dans le cas contraire (E33, non), à l'étape E35, le serveur d'application envoie à l'utilisateur destinataire un message l'avertissant de la mise à disposition d'un nouveau message vocal de réponse, qui lui est destiné.

En pratique, dans le cas d'un réseau téléphonique, le message d'avertissement précité peut prendre la forme d'une tentative d'établissement d'appel synchrone vers le numéro du destinataire, qui est effectuée automatiquement par un système de réponse vocal interactif (*interactive voice response system -* IVR) piloté par le serveur d'application. Lorsque l'appel est établi, une annonce vocale est alors automatiquement jouée dont le contenu avertit l'utilisateur destinataire qu'un nouveau message vocal vient d'arriver, et invite l'utilisateur destinataire à répondre de manière interactive à des invites de commandes via un clavier multifréquence (DTMF) ou par commandes vocales.

L'annonce vocale peut par exemple donner le choix à l'utilisateur d'écouter le message vocal et/ou d'être mis en relation directe, par appel téléphonique, avec l'utilisateur à l'origine du message vocal (le premier utilisateur).

Si l'utilisateur répond à l'appel et choisit la mise en relation directe, on peut prévoir, selon une variante de réalisation, de jouer le message vocal de réponse pendant la tentative de mise en relation. En revanche, si l'utilisateur ne répond pas à l'appel téléphonique, la mise en service de la messagerie vocale de l'utilisateur est automatiquement détectée, le message vocal de réponse est alors joué et est par conséquent enregistré dans la messagerie vocale de l'utilisateur destinataire.

## Revendications

1. Procédé de traitement, dans un terminal (10) d'un premier utilisateur, d'un message reçu dans ledit terminal (10) via une application de messagerie sur un réseau de communication (20), **caractérisé en ce qu'**il comporte les étapes suivantes :
- enregistrement (E12) dans le terminal (10) du premier utilisateur, d'un message vocal de réponse destiné à un second utilisateur émetteur du message reçu ;
- test automatique (E14, E15) de la connexion entre le terminal du premier utilisateur et le réseau de communication, et dès que le terminal du premier utilisateur est connecté au réseau, envoi du message vocal de réponse à destination d'un serveur d'application (30) sur le réseau.

2. Procédé selon la revendication 1, dans lequel l'application de messagerie vocale est une application de messagerie vocale visuelle, et dans lequel l'enregistrement du message vocal de réponse dans le terminal du premier utilisateur, est précédé de la sélection (E11) d'un message vocal reçu, identifié par un élément d'une interface utilisateur graphique affichée sur un écran équipant le terminal du premier utilisateur, et d'une action effectuée par le premier utilisateur via l'interface utilisateur graphique pour déclencher l'enregistrement du message vocal de réponse.

3. Procédé selon l'une quelconque des revendications 1 à 2, dans lequel le message vocal de réponse est encapsulé dans le corps d'une requête de type HTTP, transmise au serveur d'application, le serveur d'application étant relié à un second réseau de type Internet et utilisant un protocole de type HTTP pour transmettre le message vocal de réponse à un serveur de messagerie sur ledit second réseau.

4. Procédé selon la revendication 3, dans lequel l'en-tête de la requête de type HTTP inclut des instructions concernant le mode de délivrance du message vocal de réponse au second utilisateur, lesdites instructions incluant au moins une instruction parmi au moins la liste d'instructions suivantes :
- interdire la mise en relation directe avec le second utilisateur;
- indiquer un numéro de rappel du premier utilisateur ;
- indiquer un nombre maximal de tentatives de dépôt du message vocal de réponse dans le serveur de messagerie associé à l'opérateur réseau du second utilisateur ;
- envoyer au premier utilisateur une notification de réception du message vocal de réponse par le second utilisateur.

5. Procédé de réponse à un message reçu dans un terminal (10) d'un premier utilisateur via une application de messagerie sur un réseau de communication (20), **caractérisé en ce qu'**il comporte les étapes d'un procédé d'un traitement du message reçu dans le terminal (10) du premier utilisateur selon l'une des revendications 1 à 4 et les étapes d'un procédé de traitement, dans un serveur d'application (30) sur le réseau de communication (20), d'un message vocal de réponse en provenance du terminal d'utilisateur (10) via le réseau de communication, et destiné à un second utilisateur, **caractérisé en ce qu'**il comporte les étapes suivantes :
- réception (E31) du message vocal de réponse dans le serveur d'application (30) et détermination (E32) de l'accessibilité ou non d'au moins un serveur de messagerie associé au second utilisateur, dans lequel il est possible de déposer le message vocal de réponse ;
- lorsqu'au moins un serveur de messagerie associé au second utilisateur a été déterminé (E33), dépôt (E34) du message vocal de réponse dans un serveur de messagerie déterminé ;
- transmission (E35), à destination du second utilisateur, d'un message d'avertissement de l'arrivée du message vocal de réponse, lorsqu'aucun serveur de messagerie associé au second utilisateur, dans lequel il est possible de déposer le message vocal, n'a été déterminé (E33).

6. Procédé selon la revendication 5, dans lequel la détermination de l'accessibilité ou non d'un serveur de messagerie associé au second utilisateur, inclut l'identification de l'opérateur réseau auquel est abonné le second utilisateur destinataire du message vocal de réponse, à partir d'un identifiant d'utilisateur destinataire, contenu dans le message vocal de réponse, et dans lequel ;
- le message vocal de réponse est déposé dans un serveur de messagerie associé à l'opérateur réseau du second utilisateur, lorsque l'opérateur réseau du second utilisateur est identifié comme étant celui du premier utilisateur ;
- sinon, lorsque l'opérateur réseau du second utilisateur est identifié comme étant différent de celui du premier utilisateur, un message d'avertissement est transmis à destination du second utilisateur pour l'avertir de l'arrivée du message vocal de réponse.

7. Procédé selon l'une des revendications 5 ou 6, dans lequel l'application de messagerie est une application de messagerie vocale sur réseau de communication téléphonique, le message reçu étant un message vocal et dans lequel, à l'étape (E35) de transmission d'un message d'avertissement, un appel téléphonique d'avertissement est automatiquement composé vers le second utilisateur, via un serveur vocal interactif piloté par le serveur d'application, pour tenter de transmettre le message d'avertissement de l'arrivée du message vocal de réponse.

8. Terminal (10) d'utilisateur apte à être connecté à un réseau de communication (20), pour la mise en oeuvre d'un procédé, selon l'une quelconque des revendications 1 à 4, à un message reçu dans le terminal d'utilisateur via une application de messagerie sur le réseau de communication, le terminal d'utilisateur comprenant :
- des moyens (101, 104) d'enregistrement d'un message vocal de réponse, destiné à un second utilisateur émetteur du message reçu ;
- des moyens (102) de test automatique de la connexion entre ledit terminal d'utilisateur et le réseau de communication ;
- des moyens (103) d'envoi automatique du message vocal de réponse à destination d'un serveur d'application (30) sur le réseau, dès que le terminal d'utilisateur est connecté au réseau.

9. Système comprenant un terminal (10) selon la revendication 8, et un serveur d'application (30) relié à un réseau de communication (20), pour la mise en oeuvre d'un procédé, selon l'une quelconque des revendications 5 à 7, de réponse à un message reçu dans un terminal d'utilisateur (10) via une application de messagerie sur le réseau de communication, le serveur d'application comprenant :
- des moyens (301) de réception d'un message vocal de réponse en provenance d'un terminal (10) d'un premier utilisateur ;
- des moyens (302) de détermination de l'accessibilité ou non d'au moins un serveur de messagerie associé au second utilisateur, dans lequel il est possible de déposer le message vocal de réponse ;
- des moyens (303) de dépôt du message vocal de réponse dans un serveur de messagerie associé au second utilisateur, lorsque lesdits moyens (302) de détermination de serveur ont déterminé au moins un serveur de messagerie associé au second utilisateur ;
- des moyens (303) de transmission, à destination du second utilisateur, d'un message d'avertissement de l'arrivée du message vocal de réponse, lorsque lesdits moyens (302) de détermination de serveur n'ont pas déterminé de serveur de messagerie associé au second utilisateur.

10. Programme d'ordinateur sur un support d'informations, destiné à être exécuté dans un terminal d'utilisateur, pour la mise en oeuvre d'un procédé de traitement d'un message reçu, conforme à l'une des revendications 1 à 4, ledit programme comprenant des instructions de programme dont l'exécution dans ledit terminal d'utilisateur, met en oeuvre au moins les étapes suivantes :
- enregistrement d'un message vocal de réponse destiné à un second utilisateur émetteur d'un message reçu dans ledit terminal d'utilisateur ;
- test automatique de la connexion entre ledit terminal d'utilisateur et un réseau de communication auquel est connecté ledit terminal d'utilisateur ;
- envoi automatique du message vocal de réponse à destination d'un serveur d'application sur le réseau, dès que ledit terminal d'utilisateur est connecté au réseau.

## Patentansprüche

1. Verfahren zur Bearbeitung einer ersten Nachricht in einem Endgerät (10) eines ersten Benutzers, die in dem Endgerät (10) über eine Messaging-Anwendung in einem Kommunikationsnetz (20) empfangen wird, **dadurch gekennzeichnet, dass** es die folgenden Schritte umfasst:
- Registrierung (E12) im Endgerät (10) des ersten Benutzers einer Antwortsprachnachricht, die für einen zweiten Benutzer, der die empfangene Nachricht sendet, bestimmt ist;
- automatischer Test (E14, E15) des Anschlusses zwischen dem Endgerät des ersten Benutzers und dem Kommunikationsnetz, und sobald das Endgerät des ersten Benutzers an das Netz angeschlossen ist, Senden der Antwortsprachnachricht in Richtung eines Anwendungsservers (30) im Netz.

2. Verfahren nach Anspruch 1, bei dem die Messaging-Sprachanwendung eine visuelle Messaging-Sprachanwendung ist, und bei dem vor der Registrierung der Antwortsprachnachricht in dem Endgerät des ersten Benutzers die Auswahl (E11) einer empfangenen Sprachnachricht, die von einem Element einer Benutzergrafikschnittstelle, die auf einem Bildschirm, mit dem das Endgerät des ersten Benutzers ausgestattet ist, angezeigt wird, identifiziert wird, und eine vom ersten Benutzer über die Benutzergrafikschnittstelle durchgeführte Betätigung erfolgt, um die Registrierung der Antwortsprachnachricht auszulösen.

3. Verfahren nach einem der Ansprüche 1 bis 2, bei dem die Antwortsprachnachricht in den Körper einer Anfrage des Typs HTTP eingekapselt ist, die an den Anwendungsserver übertragen wird, wobei der Anwendungsserver mit einem zweiten Netz des Typs Internet verbunden ist und ein Protokoll des Typs HTTP verwendet, um die Antwortsprachnachricht an einen Messaging-Server in dem zweiten Netz zu übertragen.

4. Verfahren nach Anspruch 3, bei dem die Kopfzeile der Anfrage des Typs HTTP Befehle einschließt, die die Art der Lieferung der Antwortsprachnachricht an den zweiten Benutzer betreffen, wobei die Befehle mindestens einen Befehl unter mindestens der folgenden Befehlsliste einschließen:
- Verbot der direkten Verbindungsaufnahme mit dem zweiten Benutzer;
- Angabe einer Rufnummer des ersten Benutzers;
- Angabe einer maximalen Anzahl von Versuchen des Hinterlassens der Antwortsprachnachricht in dem Messaging-Server, der dem Netzbetreiber des zweiten Benutzers zugeordnet ist;
- Senden einer Empfangsmitteilung der Antwortsprachnachricht an den ersten Benutzer durch den zweiten Benutzer.

5. Verfahren zum Antworten auf eine in einem Endgerät (10) eines ersten Benutzers empfangene Nachricht über eine Messaging-Anwendung in einem Kommunikationsnetz (20), **dadurch gekennzeichnet, dass** es die Schritte eines Verfahrens einer Bearbeitung der in dem Endgerät (10) des ersten Benutzers empfangenen Nachricht nach einem der Ansprüche 1 bis 4 und die Schritte eines Verfahrens zur Bearbeitung in einem Anwendungsserver (30) in dem Kommunikationsnetz (20) einer Antwortsprachnachricht, die von dem Benutzerendgerät (10) über das Kommunikationsnetz kommt, und für einen zweien Benutzer bestimmt ist, umfasst, **dadurch gekennzeichnet, dass** es die folgenden Schritte umfasst:
- Empfang (E31) der Antwortsprachnachricht in dem Anwendungsserver (30) und Bestimmung (E32) der Zugänglichkeit oder nicht mindestens eines dem zweiten Benutzer zugeordneten Messaging-Servers, wobei es möglich ist, die Antwortsprachnachricht zu hinterlassen;
- wenn mindestens ein dem zweiten Benutzer zugeordneter Messagingserver bestimmt wurde (E33), Hinterlassen (E34) der Antwortsprachnachricht in einem bestimmten Messaging-Server;
- Übertragung (E35) in Richtung des zweiten Benutzers einer Ankündigungsnachricht der Ankunft der Antwortsprachnachricht, wenn kein dem zweiten Benutzer zugeordneter Messaging-Server, in dem es möglich ist, die Sprachnachricht zu hinterlassen, bestimmt wurde (E33).

6. Verfahren nach Anspruch 5, bei dem die Bestimmung der Zugänglichkeit oder nicht eines dem zweiten Benutzer zugeordneten Messaging-Servers die Identifizierung des Netzbetreibers, an dem der zweite Benutzer, für den die Antwortsprachnachricht bestimmt ist, abonniert ist, auf Basis einer Zielbenutzeridentität, die in der Antwortsprachnachricht enthalten ist, einschließt, und bei dem:
- die Antwortsprachnachricht in einem dem Netzbetreiber des zweiten Benutzers zugeordneten Messaging-Server hinterlassen wird, wenn der Netzbetreiber des zweiten Benutzers als jener des ersten Benutzers identifiziert wird;
- andernfalls, wenn der Netzbetreiber des zweiten Benutzers als ein anderer als jener des ersten Benutzers identifiziert wird, wird eine Ankündigungsnachricht in Richtung des zweiten Benutzers übertragen, um ihm die Ankunft der Antwortsprachnachricht anzukündigen.

7. Verfahren nach einem der Ansprüche 5 oder 6, bei dem die Messaging-Anwendung eine Sprach-Messaging-Anwendung in einem Telefonkommunikationsnetz ist, wobei die empfangene Nachreicht eine Sprachnachricht ist, und bei dem in dem Schritt (E35) der Übertragung einer Ankündigungsnachricht ein Ankündigungstelefonanruf automatisch zu dem zweiten Benutzer über einen interaktiven Sprachserver, der von dem Anwendungsserver gesteuert wird, generiert wird, um zu versuchen, die Ankündigungsnachricht der Ankunft der Antwortsprachnachricht zu übertragen.

8. Benutzerendgerät (10), das geeignet ist, an ein Kommunikationsnetz (20) für den Einsatz eines Verfahrens nach einem der Ansprüche 1 bis 4 bei einer in dem Benutzerendgerät über eine Messaging-Anwendung in dem Kommunikationsnetz empfangenen Nachricht angeschlossen zu werden, wobei das Benutzerendgerät umfasst:
- Mittel (101, 104) zur Aufzeichnung einer Antwortsprachnachricht, die für einen zweiten Benutzer, der die empfangene Nachricht sendet, bestimmt ist;
- Mittel (102) zum automatischen Testen des Anschlusses zwischen dem Benutzerendgerät und dem Kommunikationsnetz;
- Mittel (103) zum automatischen Senden der Antwortsprachnachricht in Richtung eines Anwendungsservers (30) in dem Netz, sobald das Benutzerendgerät an das Netz angeschlossen ist.

9. System, umfassend ein Endgerät (10) nach Anspruch 8 und einen Anwendungsserver (30), der mit einem Kommunikationsnetz (20) für den Einsatz eines Verfahrens nach einem der Ansprüche 5 bis 7 zur Beantwortung einer in dem Benutzerendgerät (10) über eine Messaging-Anwendung in dem Kommunikationsnetz empfangenen Nachricht, wobei der Anwendungsserver umfasst:
- Mittel (301) zum Empfang einer Antwortsprachnachricht, die von einem Endgerät (10) eines ersten Benutzers kommt;
- Mittel (302) zur Bestimmung der Zugänglichkeit oder nicht mindestens eines dem zweiten Benutzer zugeordneten Messaging-Servers, in dem die Antwortsprachnachricht hinterlassen werden kann;
- Mittel (303) zum Hinterlassen der Antwortsprachnachricht in einem dem zweiten Benutzer zugeordneten Messaging-Server, wenn die Serverbestimmungsmittel (302) mindestens einen dem zweiten Benutzer zugeordneten Messaging-Server bestimmt haben;
- Mittel (303) zur Übertragung in Richtung des zweiten Benutzers einer Ankündigungsnachricht der Ankunft der Antwortsprachnachricht, wenn die Serverbestimmungsmittel (302) keinen dem zweiten Benutzer zugeordneten Messaging-Server bestimmt haben.

10. Computerprogramm auf einem Informationsträger, das dazu bestimmt ist, in einem Benutzerendgerät ausgeführt zu werden, für den Einsatz eines Verfahrens zur Bearbeitung einer empfangenen Nachricht nach einem der Ansprüche 1 bis 4, wobei das Programm Programmbefehle umfasst, deren Ausführung in dem Benutzerendgerät mindestens die folgenden Schritte einsetzt:
- Aufzeichnung einer Antwortsprachnachricht, die für einen zweiten Benutzer bestimmt ist, der eine in dem Benutzerendgerät empfangene Nachricht sendet;
- automatischer Test des Anschlusses zwischen dem Benutzerendgerät und einem Kommunikationsnetz, an das das Benutzerendgerät angeschlossen ist;
- automatisches Senden der Antwortsprachnachricht in Richtung eines Anwendungsservers im Netz, sobald das Benutzerendgerät an das Netz angeschlossen ist.

## Claims

1. Method of processing, in a terminal (10) of a first user, a message received in said terminal (10) via a messaging application on a communication network (20), **characterized in that** it comprises the following steps:
- recording (E12) in the terminal (10) of the first user, of a voice reply message intended for a second user who sent the message received;
- automatic testing (E14, E15) of the connection between the terminal of the first user and the communication network, and as soon as the terminal of the first user is connected to the network, dispatching of the voice reply message destined for an application server (30) on the network.

2. Method according to Claim 1, in which the voice messaging application is a visual voice messaging application, and in which the recording of the voice reply message in the terminal of the first user is preceded by the selection (E11) of a voice message received, identified by an element of a graphical user interface displayed on a screen equipping the terminal of the first user, and an action performed by the first user via the graphical user interface to trigger the recording of the voice reply message.

3. Method according to either one of Claims 1 to 2, in which the voice reply message is encapsulated in the body of a request of HTTP type, transmitted to the application server, the application server being linked to a second network of Internet type and using a protocol of HTTP type to transmit the voice reply message to a messaging server on said second network.

4. Method according to Claim 3, in which the header of the request of HTTP type includes instructions relating to the mode of delivery of the voice reply message to the second user, said instructions including at least one instruction from among at least the list of following instructions:
- prohibit direct hookup with the second user;
- indicate a callback number of the first user;
- indicate a maximum number of attempts to post the voice reply message in the messaging server associated with the network operator of the second user;
- dispatch to the first user a notification of reception of the voice reply message by the second user.

5. Method of replying to a message received in a terminal (10) of a first user via a messaging application on a communication network (20), **characterized in that** it comprises the steps of a method of a processing of the message received in the terminal (10) of the first user according to one of Claims 1 to 4 and the steps of a method of processing, in an application server (30) on the communication network (20), a voice reply message originating from the user terminal (10) via the communication network, and intended for a second user, **characterized in that** it comprises the following steps:
- reception (E31) of the voice reply message in the application server (30) and determination (E32) of the accessibility or otherwise of at least one messaging server associated with the second user, in which it is possible to post the voice reply message;
- when at least one messaging server associated with the second user has been determined (E33), posting (E34) of the voice reply message in a determined messaging server;
- transmission (E35), destined for the second user, of a message warning of the arrival of the voice reply message, when no messaging server associated with the second user, in which it is possible to post the voice message, has been determined (E33).

6. Method according to Claim 5, in which the determination of the accessibility or otherwise of a messaging server associated with the second user includes the identification of the network operator to which the second user who is the recipient of the voice reply message is a subscriber, on the basis of a recipient user identifier contained in the voice reply message, and in which;
- the voice reply message is posted in a messaging server associated with the network operator of the second user, when the network operator of the second user is identified as being that of the first user;
- otherwise, when the network operator of the second user is identified as being different from that of the first user, a warning message is transmitted destined for the second user to warn same of the arrival of the voice reply message.

7. Method according to one of Claims 5 or 6, in which the messaging application is a voice messaging application over telephone communication network, the message received being a voice message and in which, in the step (E35) of transmitting a warning message, a warning telephone call is automatically dialled to the second user, via an interactive voice server driven by the application server, to attempt to transmit the message warning of the arrival of the voice reply message.

8. User terminal (10) able to be connected to a communication network (20), for the implementation of a method, according to any one of Claims 1 to 4, on a message received in the user terminal via a messaging application on the communication network, the user terminal comprising:
- means (101, 104) for recording a voice reply message, intended for a second user who sent the message received;
- means (102) for automatically testing the connection between said user terminal and the communication network;
- means (103) for automatically dispatching the voice reply message destined for an application server (30) on the network, as soon as the user terminal is connected to the network.

9. System comprising a terminal (10) according to Claim 8, and an application server (30) linked to a communication network (20), for the implementation of a method, according to any one of Claims 5 to 7, of replying to a message received in a user terminal (10) via a messaging application on the communication network, the application server comprising:
- means (301) for receiving a voice reply message originating from a terminal (10) of a first user;
- means (302) for determining the accessibility or otherwise of at least one messaging server associated with the second user, in which it is possible to post the voice reply message;
- means (303) for posting the voice reply message in a messaging server associated with the second user, when said server determining means (302) have determined at least one messaging server associated with the second user;
- means (303) for transmitting, destined for the second user, a message warning of the arrival of the voice reply message, when said server determining means (302) have not determined any messaging server associated with the second user.

10. Computer program on an information medium, intended to be executed in a user terminal, for the implementation of a method for processing a message received, in accordance with one of Claims 1 to 4, said program comprising program instructions whose execution in said user terminal implements at least the following steps:
- recording of a voice reply message intended for a second user sending a message received in said user terminal;
- automatic testing of the connection between said user terminal and a communication network to which said user terminal is connected;
- automatic dispatching of the voice reply message destined for an application server on the network, as soon as said user terminal is connected to the network.
